(19) Europäisches Patentamt
European Patent Office
Office européen des brevets

(11) Veröffentlichungsnummer: **0 482 470 A1**

# (12) EUROPÄISCHE PATENTANMELDUNG

(21) Anmeldenummer: **91117522.2**

(22) Anmeldetag: **14.10.91**

(51) Int. Cl.5: **C08K 5/11**, C08K 5/09, C08L 21/00

(30) Priorität: **25.10.90 DE 4033903**

(43) Veröffentlichungstag der Anmeldung: **29.04.92 Patentblatt 92/18**

(84) Benannte Vertragsstaaten: **AT BE DE ES FR GB IT NL SE**

(71) Anmelder: **BAYER AG**
**W-5090 Leverkusen 1 Bayerwerk(DE)**

(72) Erfinder: **Thörmer, Joachim, Dr.**
**Emil-Nolde-Strasse 39**
**W-5090 Leverkusen 1(DE)**
Erfinder: **Scholl, Thomas, Dr.**
**Alte Wipperfürther Strasse 24a**
**W-5060 Bergisch Gladbach 2(DE)**

(54) **Verwendung von Malein- und Fumarsäurehalbestern und ihren Salzen zur Verminderung der Nitrosaminbildung bei der Schwefelvulkanisation.**

(57) Malein- und Fumarsäurehalbester und ihre Salze, insbesondere ihre Zinksalze können die Nitrosaminbildung bei der Schwefelvulkanisation von Kautschuken vermindern.

EP 0 482 470 A1

Die Erfindung betrifft die Verwendung von Malein- und Fumarsäurehalbestern und ihren Salzen, insbesondere ihren Zinksalzen, zur Verminderung des Nitrosamingehalts durch Schwefelvulkanisation hergestellter Kautschukvulkanisate.

Beim Mischen von Kautschuken mit Vulkanisiersystemen, die Verbindungen mit chemisch gebundenem Stickstoff enthalten (wie z.B. Schwefelspender bzw. Beschleuniger aus der Reihe der Thiuramverbindungen oder Vulkanisationsbeschleuniger aus der Reihe der Thiazolverbindungen), und in noch höherem Maße bei der Vulkanisation dieser Kautschukmassen besteht das Risiko der unerwünschten Bildung von Nitrosaminen. Wegen der cancerogenen Wirkung der Nitrosamine möchte man gerne Nitrosamin-arme bzw. Nitrosamin-freie Kautschukmassen und -vulkanisate herstellen können.

Während man z.B. Schwefelspender oft problemlos durch elementaren Schwefel ersetzen kann, hat man bis heute keine Stickstoff-freien Vulkanisationsbeschleuniger gefunden, die so wirksam wie die bisher eingesetzten Substanzen sind.

Solange solche an sich erwünschten hochwirksamen N-freien Vulkanisationsbeschleuniger nicht zur Verfügung stehen, sind auch Zusätze interessant, die entweder die Nitrosaminbildung unterdrücken oder entstehende Nitrosamine durch eine chemische Reaktion abfangen. Als eine solche Verbindung ist α-Tocopherol beschrieben worden (Kautschuk + Gummi-Kunststoffe 43 (1990), 95-106). Der hohe Preis von α-Tocopherol dürfte seinem Einsatz in großtechnischem Maßstab in der Kautschukindustrie allerdings entgegenstehen.

Überraschenderweise wurde nun gefunden, daß sich Maleinsäurehalbester und ihre Salze zu diesem Zweck hervorragend eignen.

Gegenstand der Erfindung ist also die Verwendung von Maleinsäurehalbestern und Fumarsäurehalbestern der Formel

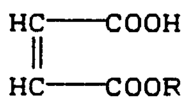

(Ia)

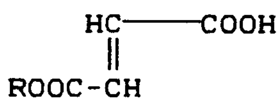

(Ib)

und ihrer Salze,
worin

R einen organischen Rest mit 1 bis 18, vorzugsweise 4 bis 18, C-Atomen bedeutet,

zur Verminderung des Nitrosamingehalts durch Schwefelvulkanisation hergestellter Kautschukvulkanisate.

Bevorzugte Maleinsäurehalbester und Fumarsäurehalbester umfassen Halbester von $C_1$- $C_{22}$-, vorzugsweise $C_4$-$C_{18}$-Alkoholen. Die Alkoholkomponenten der Halbester können aliphatisch, cycloaliphatisch, araliphatisch und aromatisch sein; sie können (cyclo)olefinische C=C-Doppelbindungen ebenso wie Halogensubstituenten, z.B. Chlorsubstituenten, enthalten, und sie können linear oder verzweigt sein, Bevorzugte Alkoholkomponenten umfassen Methanol, Isopropanol, n-, iso- und tert.-Butanol, Hexanole, Octanole, Stearylalkohol, Allylalkohol, Cyclohexanol, Benzylalkohol, Phenol, Maleinsäuremono-n-butyl-, -octyl-, -ethylhexyl- und -allylester sind besonders bevorzugt.

Die Kationen der erfindungsgemäß zu verwendenden Halbester-Salze leiten sich vorzugsweise von Alkali- und Erdalkalimetallen und von Zink ab, wobei die Zinksalze besonders zu bevorzugen sind, weil sie auch einen positiven Einfluß auf die Mooney-Viskosität, den Druckverformungsrest, die Stabilität gegen Heißluftalterung und die Festigkeit der Vulkanisate ausüben können.

Die erfindungsgemäß zu verwendenden Malein- und Fumarsäurehalbester(salze) können in Mengen von 0,1 bis 8, vorzugsweise 1 bis 6, insbesondere 1,5 bis 4, Gew.-%, bezogen auf Kautschuk, eingesetzt werden.

Für die erfindungsgemäße Verwendung geeignete Kautschuke umfassen neben Naturkautschuk auch Synthesekautschuke. Bevorzugte Synthesekautschuke sind beispielsweise bei W. Hofmann, Kautschuk-Technologie, Gentner Verlag, Stuttgart 1980, beschrieben. Sie umfassen u.a.

EPDM - Ethylen/Propylen/Dien-Terpolymerisate

IIR - Butylkautschuk

BR - Polybutadien

ABR - Butadien/Acrylsäure-$C_1$-$C_4$-alkylester-Copolymerisate mit Acrylester-Gehalten von 5 bis 60, vorzugsweise von 15 bis 50 Gew.-%

| | |
|---|---|
| CR - | Polychloropren |
| IR - | Polyisopren |
| SBR - | Styrol/Butadien-Copolymerisate mit Styrolgehalten von 1 bis 60, vorzugsweise von 20 bis 50 Gew.-% |
| NBR - | Butadien/Acrylnitril-Copolymerisate mit Acrylnitrilgehalten von 5 bis 60, vorzugsweise 10 bis 50 Gew.-%, und insbesondere |
| HNBR - | Hydrierungsprodukte von NBR. |

Die Kautschuke besitzen im allgemeinen Mooney-Viskositäten (nach DIN 53 523) von 5 bis 140, vorzugsweise von 10 bis 120, insbesondere 20 bis 80 (ML 1 + 4) 100 °C und Glasübergangstemperaturen unter 20 °C, vorzugsweise unter 0 °C, bestimmt im Torsionsschwingungsversuch nach DIN 53 445.

EPDMs umfassen Kautschuke, in denen das Gewichtsverhältnis von Ethylen- zu Propylenresten im Bereich von 40:60 bis 65:35 liegt und die 1 bis 20 C=C-Doppelbindungen/1.000 C-Atome aufweisen können. Als geeignete Dien-Monomere im EPDM seien beispielsweise genannt: konjugierte Diene, z.B. Isopren und Butadien-1,3, und nicht-konjugierte Diene mit 5 bis 25 C-Atomen, z.B. 1,4-Pentadien, 1,4-Hexadien, 1,5-Hexadien, 2,5-Dimethyl-1,5-hexadien und 1,4-Octadien; cyclische Diene, z.B. Cyclopentadien, Cyclohexadien, Cyclooctadien und Dicyclopentadien; Alkyliden- und Alkenylnorbornene, z.B. 5-Ethyliden-2-norbornen, 5-Butyliden-2-norbornen, 2-Methallyl-5-norbornen, 2-Isopropenyl-5-norbornen und Tricyclo-diene.

Bevorzugt sind die nicht-konjugierten Diene Hexadien-1,5, Ethyliden-norbornen und Dicyclopentadien. Der Diengehalt im EPDM beträgt vorzugsweise 0,5 bis 10 Gew.-%, bezogen auf EPDM.

Derartige EPDM-Kautschuke sind z.B. in der DE-OS 2 808 709 beschrieben.

Der Begriff "Butylkautschuk" im Sinne der Erfindung umfaßt Isobuten-Copolymerisate aus 95 bis 99,5, vorzugsweise 97,5 bis 99,5, Gew.-% Isobuten und 0,5 bis 5, vorzugsweise 0,5 bis 2,5, Gew.-% copolymerisierbarem Dien, wie z.B. Butadien, Dimethylbutadien, Pentadien-1,3, insbesondere Isopren. Butylkautschuk wird in großtechnischem Maßstab fast ausschließlich als Isobuten/Isopren-Copolymerisat durch kationische Lösungspolymerisation bei niedriger Temperatur hergestellt; vgl. z.B. Kirk-Othmer, Encyclopedia of Chemical Technology, 2nd ed., Bd. 7, S. 688, Interscience Publ., New York-London-Sydney 1965 und Winnacker-Küchler, Chemische Technologie, 4. Aufl., Bd. 6, S. 550-555, Carl Hanser Verlag, München-Wien 1962.

Die Polybutadiene umfassen Polybutadienkautschuke mit cis-1,4-Struktur-Gehalten von 20 bis 100%, vorzugsweise von 30 bis 100%, wie sie z.B. durch Butadienpolymerisation mit Hilfe von Katalysatoren auf Basis von Lithium, Nickel, Titan, Cobalt, Seltenen Erden, Uran erhalten werden können.

Polychloroprene sind Chloroprenpolymerisate, die neben polymerisierten 2-Chloropreneinheiten bis 30, vorzugsweise bis 20 Gew.-%, bezogen auf Chloroprenpolymerisat, copolymerisierte Einheiten anderer ethylenisch ungesättigter Monomerer enthalten können, also Polychloroprene, wie sie beispielsweise in "Methoden der Organischen Chemie" (Houben-Weyl), Bd. E20/2, 842-859, Georg Thieme Verlag, Stuttgart - New York 1987, beschrieben sind.

Bevorzugte, mit Chloropren copolymerisierbare, ethylenisch ungesättigte "andere Monomere" umfassen Verbindungen mit 3 bis 12 C-Atomen und 1 oder 2 copolymerisierbaren C=C-Doppelbindungen pro Molekül. Beispiele bevorzugter "anderer Monomerer" sind Styrol, 2,3-Dichlorbutadien, 1-Chlorbutadien, Butadien, Isopren, Acrylsäure, Methacrylsäure, Acrylnitril und Methacrylnitril. Wichtigste Comonomere sind 2,3-Dichlorbutadien und 1-Chlorbutadien.

Bevorzugte Styrol/Butadien-Copolymerisate sind solche mit Gehalten an einpolymerisiertem Styrol von 18 bis 60, vorzugsweise 20 bis 50, Gew.-%. Lösungs- und Emulsionspolymerisate sind besonders bevorzugt.

Nitrilkautschuke und hydrierte Nitrilkautschuke sind Nitrilkautschuke, wie sie z.B. in Ullmanns Encyclopädie der technischen Chemie, Band 13, Verlag Chemie, Weinheim-New York 1977, S. 611-614, und voll- und teilhydrierte Nitrilkautschuke, wie sie z.B. in Die Angewandte Makromolekulare Chemie 145/146 (1986) 161-179 beschrieben sind.

Der Ausdruck "Nitrilkautschuk" steht für Butadien/Acrylnitril-Copolymerisate mit einem Gehalt an copolymerisiertem Acrylnitril von 5 bis 60, vorzugsweise 10 bis 50 Gew.-%. "Hydriert" bedeutet in diesem Zusammenhang, daß 90 bis 98,5, vorzugsweise 94 bis 98 % der hydrierbaren C=C-Doppelbindungen hydriert sind, während die C≡N-Dreifachbindungen der Nitrilgruppen nicht hydriert sind. Die Hydrierung von Nitrilkautschuk ist bekannt; US-PS 3 700 637, DE-OS 25 39 132, 30 46 008, 30 46 251, 32 27 650, 33 29 974, EP-A 111 412, FR-PS 2 540 503.

Ausführliche Beschreibungen von Schwefelvulkanisiersystemen finden sich bei W. Hofmann, "Vulkanisation und Vulkanisationshilfsmittel", Verlag Berliner Union GmbH, Stuttgart 1965 und bei Alliger und Sjothun, "Vulcanization of Elastomers", Reinhold Pub. Corp. New York 1964. Geeignete Schwefelspender umfassen Thiurampolysulfide wie z.B. Dipentamethylenthiuram-tetra- und -hexasulfid, Tetramethylthiuram-disulfid; Amindisulfide wie z.B. Dimorpholyldisulfid; Natriumpolysulfide und Thioplaste.

Bevorzugte Schwefelvulkanisiersysteme enthalten

a) Schwefel oder Schwefelspender,
b) gegebenenfalls Vulkanisationsbeschleuniger und
c) gegebenenfalls einen oder mehrere Aktivatoren.

Als Menge a) verwendet man in der Regel 0,2 bis 3,0 Gew.-% Schwefel (im Falle von Schwefelspender: berechnet als freiwerdender Schwefel), bezogen auf Kautschuk. Auch Schwefel- modifiziertes Polychloropren kann als Schwefelspender fungieren.

Die Vulkanisationsbeschleuniger b) verwendet man im allgemeinen in Mengen von 1 bis 3,5 Gew.-%, bezogen auf Kautschuk. Bevorzugte Vulkanisationsbeschleuniger b) umfassen Thiazolbeschleuniger wie z.B.

2-Mercaptobenzothiazol,
Dibenzothiazyl-disulfid,
Benzothiazyl-2-cyclohexylsulfenamid (CBS),
Benzothiazyl-2-tert.-butylsulfenamid (TBBS),
N-Morpholinothio-2-benzothiazol (MBS),
Benzothiazyl-2-diisopropylsulfenamid (DIBS),
Benzothiazyl-2-tert.-amylsulfenamid (AMZ),
Benzothiazyl-dicyclohexylsulfenamid (DCBS) und
Morpholino-thiocarbonyl-sulfenmorpholid (OTOS).

Weitere bevorzugte Vulkanisationsbeschleuniger b) umfassen Diphenylguanidin (DPG) und Di-o-tolylguanidin (DOTG); Thiurame wie Thiurammono- und -disulfide; und Dithiocarbamate, sowie Thiophosphate und deren Derivate und Salze, wie z.B. ihre Zinksalze.

Die bedeutendsten Aktivatoren c) sind die Metalloxide, insbesondere Zinkoxid. In einzelnen Fällen wird auch Magnesiumoxid oder Calciumhydroxid verwendet.

Den Kautschuken kann man vor der Vulkanisation Füllstoffe, wie z.B. Ruß, Weichmacher, Alterungsschutzmittel und/oder Verarbeitungshilfsmittel in üblichen Mengen zusetzen.

Als Verarbeitungshilfsmittel kommen beispielsweise Fettsäuren, wie z.B. Stearinsäure, in Frage.

Das Mischen der Komponenten kann auf üblichen Mischaggregaten erfolgen.

Bevorzugte Mischaggregate sind die in der Kautschukindustrie üblichen Kneter, Walzen, Innenmischer und Mischextruder, die in der Regel mit Scherraten von 1 bis 1000 $sec^{-1}$, vorzugsweise 1 bis 200 $sec^{-1}$ arbeiten.

Die Vulkanisation kann bei Temperaturen von 100 bis 200 °C, vorzugsweise 130 bis 180 °C, gegebenenfalls unter einem Druck von 10 bis 200 bar, erfolgen. Im Anschluß an die Vulkanisation können die Vulkanisate durch Lagerung bei höherer Temperatur getempert werden.

"Vulkanisiert" im Sinne der Erfindung bedeutet, daß bei 10-stündiger Extraktion im Soxhlet-Aufsatz mit Toluol als Extraktionsmittel weniger als 10, vorzugsweise weniger als 5 Gew.-%, bezogen auf Kautschuk, extrahierbar ist.

## Beispiele

Verzeichnis und Abkürzungen der Prüfmethoden:

| | |
|---|---|
| Vulkameter | Frank-Vulkameter System Bayer, Aufheizung jeweils 1 min, Meßbereich 3/20 mV, Laufdauer bei 150 °C: 30 min, Vorschub 600 mm/h |
| $t_s$/120 °C bzw. 130 °C (min) | Anvulkanisationszeit aus Vulkametermessung bei 120 °C bzw. 130 °C, Zeit bis zum Anstieg der Schubmodulkurve um 15 mm über Minimum |
| $t_{90}$ (min) | Ausheizzeit, Zeit bis zum Erreichen von 90 % des Schubmoduls (Bayer-Vulkameter) bei Laufzeitende |
| $t_{90}$ - $t_s$ (min) | Reaktionszeit, Differenz zwischen Ausheizzeit $t_{90}$ und Anvulkanisaitonszeit $t_s$, gemessen bei derselben Temperatur, z.B. 150 °C |
| Schubmodul ΔF | (N) Endwert-Anfangswert des Schubmoduls aus Vulkameterversuch |
| Stufenheizung | 4 mm Klappen, Pressenheizung in mehreren Zeitstufen |
| $M_{300}$ (MPa) | Spannungswert bei 300 % Dehnung, DIN 53 504 |
| F (MPa) | Zerreißfestigkeit, DIN 53 504, Normring R I |
| D (%) | Bruchdehnung, DIN 53 504, Normring R I |
| H (Shore A) | Härte nach Shore A, DIN 53 505 |
| E (%) | Rückprallelastizität DIN 53 512 |
| W (N) | Ringstruktur nach Pohle (Hausmethode) |
| Druckverformungsrest [%] | Anlehnung an DIN 53 517, konstante Verformung, 10 mm hoher Zylinder, 10 mm Durchmesser |

Die Bestimmung des Nitrosamingehaltes erfolgte gemäß Franck, Kunststoffe-33 Lfg. August 1984, S. 37 f.

A. HNBR-Kautschukmasse

Als Kautschuk wurde ein hydriertes Acrylnitril/Butadien-Copolymerisat mit einem Acrylnitrilgehalt von 33,7 Gew.-%, einem Hydrierungsgrad von 96,4%, bezogen auf ursprünglich vorhandene C-C-Doppelbindungen, und einer Mooney-Viskosität von 67 (ML 1 + 4) 100 ° C eingesetzt (®Therban 1707 S der Bayer AG).

In einem Laborkneter wurde bei 50 ° C der Kautschuk 0,5 Minuten lang mastiziert, und dann wurden Schwefel, Stearinsäure, Zinkoxid (®Zinkoxyd aktiv der Bayer AG), styrolisiertes Diphenylamin (®Vulkanox DDA der Bayer AG), Zink-Methylmercaptobenzimidazol (®Vulkanox ZMB2 der Bayer AG), Ruß (Corax N550 der Fa. Degussa/Wesseling) und Zink-ethylhexylmaleinat (Mengen siehe Tabelle 1) zugegeben und bis zur Homogenisierung geknetet (4,5 Minuten).

Nach Abkühlen der Kautschukmasse auf ca. 100 ° C auf einer Walze wurde ein Beschleunigersystem bestehend aus Tetramethylthiuramdisulfid (®Vulkacit Thiuram C der Bayer AG) und Benzothiazyl-2-cyclohexylsulfenamid (®Vulkacit CZ/ MG der Bayer AG) zugemischt.

Die Eigenschaften der erhaltenen Mischungen und ihrer Vulkanisate werden in Tabelle 2 aufgelistet.

Tabelle 1

| Zusammensetzung | | | |
|---|---|---|---|
| | 1 | 2 | 3 |
| HNBR | 100 | 100 | 100 |
| Schwefel | 0,51 | 0,51 | 0,51 |
| Stearinsäure | 1 | 1 | 1 |
| Zinkoxid | 2 | 2 | 2 |
| Vulkanox DDA | 1 | 1 | 1 |
| Vulkanox ZMB 2 | 0,4 | 0,4 | 0,4 |
| Ruß | 45 | 45 | 45 |
| Vulkacit Thiuram C | 2 | 2 | 2 |
| Vukacit CZ/MG | 0,5 | 0,5 | 0,5 |
| Zink-ethylhexylmaleinat | - | 1,5 | 3 |

Tabelle 2: Eigenschaften

| | 1 | 2 | 3 |
|---|---|---|---|
| Mooney-Viskosität ML1+4/120° C | 76 | 74 | 72 |
| Mooney-Scorch/ 130° C (min) | 18,3 | 21,7 | 20,9 |
| Vulkameter 160° C | | | |
| $t_s$ (min) | 5,2 | 4,7 | 4,7 |
| $t_{80}$ (min) | 8,9 | 7,6 | 7,7 |
| $F_{min}$ (N) | 1,8 | 1,9 | 1,8 |
| $F_{max}$ (N) | 50,4 | 52,9 | 52,9 |
| Pressen-Vulkanisation: | 30 Minuten/160° C (S2-Stäbe n. DIN 53 502 u. 53 504) | | |
| Zugfestigkeit (MPa) | 29,4 | 28,6 | 27 |
| Bruchdehnung (%) | 500 | 500 | 490 |
| Spannungswert $S_{100}$ (MPa) | 3,9 | 4,1 | 3,9 |
| Shore-Härte (A) | 73 | 72 | 73 |
| Rückprallelastizität (%) | 42 | 43 | 43 |
| Weiterreißwiderstand nach DIN 53 515 | 19,1 | 19,8 | 20,6 |
| Nitrosamingehalt (ppb) | | | |
| vor der Vulkanisation | 28 | 29 | 32 |
| nach der Vulkanisation | 185 | 45 | 35 |

B. NBR-Kautschukmasse

Als Kautschuk wurde eine Acrylnitril/Butadien-Copolymerisat mit einem Acrylnitrilgehalt von 28 Gew.-% und einer Mooney-Viskosität von 45 (ML 4) 100° C eingesetzt (®Perbunan N 2807 NS der Bayer AG).

In einem Laborkneter wurde bei 50° C der Kautschuk 0,5 Minuten lang mastiziert, und dann wurden 50 gew.-%ige Schwefelpaste (®Struktol SU 105 der Fa. Schill & Seilacher/Hamburg), Ruß (®Corax N 326 bzw ®Durex O der Fa. Degussa/Wesseling), styrolisiertes Diphenylamin (®Vulkanox DPA der Bayer AG), polymeres 2.2.4-Trimethyl-1.2-dihydrochinolin (®Vulkanox HS der Bayer AG), Weichmacher (Etherthioether; ®Vulkanol OT der Bayer AG), Verarbeitungshilfsmittel auf Basis hochaktiver Kieselsäure (®Aflux S der Fa.

Rheinchemie Rheinau GmbH, Mannheim), Zinkoxid (Zinkweiß RS der Zinkweiß-Forschungsgesellschaft, Oberhausen), Stearinsäure und Zink-n-octylmaleinat zugegeben und bis zur Homogenisierung geknetet (4.5 Minuten).

Nach Abkühlen der Kautschukmasse auf ca. 100 °C auf einer Walze wurde Tetramethylthiuramdisulfid (®Vulkacit Thiuram/C der Bayer AG) zugemischt. Zusammensetzung und experimentelle Befunde ergeben sich aus den nachfolgenden Tabellen 3 und 4.

Tabelle 3

| Zusammensetzung | |
|---|---|
| Zusammensetzung | [Gewichtsteile] |
| NBR | 100 |
| Schwefelpaste | 0,6 |
| Ruß Corax N 326 | 30 |
| Ruß Durex O | 65 |
| Vulkanox DDA | 1,5 |
| Vulkanox HS | 1 |
| Weichmacher | 6 |
| Aflux S | 3 |
| Zinkoxid | 5 |
| Stearinsäure | 1 |
| Vulkacit Thiuram/C | 2,5 |
| Zink-n-octyl-maleinat | s. Tabelle 4 |

Tabelle 4

| Eigenschaften | | |
|---|---|---|
| Vulkameter: | ohne Zink-n-octyl-maleinat | mit 4% Zink-n-octyl-maleinat |
| $t_s$ 120 °C [Min.] | 18,0 | 14,7 |
| $t_s$ 150 °C [Min.] | 2,8 | 2,3 |
| $t_{90}$ 150 °C [Min.] | 10,0 | 11,5 |
| $t_{90}$-$t_s$ 150 °C [Min.] | 7,2 | 9,2 |
| $F_{max}$ [N] | 53 | 46 |
| Nitrosamingehalt vor der Vulkanisation [ppb] | 47 | 36 |
| nach der Vulkanisation [ppb] | 153 | 89 |

C. EPDM-Kautschukmasse

Als Kautschuk wurde ein EPDM (®Buna AP 331 mit Ethylidennorbornen als Termonomer, Mooney-Viskosität: 70 (ML 1 + 4) 100 °C, Produkt der Fa. Hüls AG, Marl) eingesetzt.

In einem Laborkneter wurde bei 50 °C der Kautschuk 0,5 Minuten lang mastiziert, und dann wurden Schwefel, Stearinsäure, Zinkoxid (®Zinkoxyd aktiv der Bayer AG), styrolisiertes Diphenylamin (®Vulkanox DDA der Bayer AG), Zink-Methylmercaptobenzimidazol (®Vulkanox ZMB 2 der Bayer AG, Ruß (®Corax N 550 der Fa. Degussa, Wesseling) sowie Zink-mono-n-octylmaleinat zugegeben und bis zur Homogenisierung geknetet.

Nach Abkühlen der Kautschukmasse auf ca. 100 °C auf einer Walze wurde ein Beschleunigersystem bestehend aus Tetramethylthiuramdisulfid (®Vulkacit Thiuram C der Bayer AG) und Benzothiazyl-2-cyclohexyl-sulfenamid (®Vulkacit CZ/MG der Bayer AG) und gegebenenfalls N-Trichlormethylsulfenylbenzolsulfanilid (®Vulkalent E der Bayer AG) zugemischt.

Zusammensetzungen und Eigenschaften der Vulkanisate finden sich in den nachfolgenden Tabellen 5 und 6.

Tabelle 5

| Zusammensetzung | | | |
|---|---|---|---|
| | 1 | 2 | 3 |
| EPDM | 100 | 100 | 100 |
| Schwefel | 0,51 | 0,51 | 0,51 |
| Ruß | 45 | 45 | 45 |
| Zinkoxid | 5 | 5 | 5 |
| Stearinsäure | 0,5 | 0,5 | 0,5 |
| Vulkanox DDA | 1 | 1 | 1 |
| Vulkanox ZMB 2 | 0,4 | 0,4 | 0,4 |
| Vulkacit Thiuram C | 2 | 2 | 2 |
| Vulkacit CZ/MG | 0,5 | 0,5 | 0,5 |
| Zn-n-octylmaleinat | - | 3 | 3 |
| Vulkalent E | - | - | 1 |

Tabelle 6: Eigenschaften

| | 1 | 2 | 3 |
|---|---|---|---|
| Mooney-Viskosität (ML 1+4) 120° C | 77 | 75 | 74 |
| Vulkameter 160° C | | | |
| $t_s$ [Min.] | 3,4 | 2,4 | 2,2 |
| $t_{80}$ [Min.] | 8,6 | 8,1 | 8,0 |
| $t_{90}$ [Min.] | 13,5 | 12,8 | 12,1 |
| $t_{max}$ [Min.] | 45 | 45 | 45 |
| $F_{min}$ [N] | 2,9 | 2,3 | 2,3 |
| $F_{max}$ [N] | 50,7 | 44,1 | 40,9 |
| $F_{max}-F_{min}$ [N] | 47,8 | 41,8 | 38,6 |
| Pressevulkanisation: 30 Min/160° C | | | |
| F [MPa] | 15,3 | 12,1 | 12,6 |
| D (%) | 495 | 545 | 605 |
| S 100 [MPa] | 2,6 | 2,2 | 2,1 |
| S 200 [MPa] | 5,7 | 4,2 | 3,9 |
| S 300 [MPa] | 9,1 | 6,6 | 6,1 |
| H 23° C (Shore A) | 66 | 67 | 63 |
| E 23° C (%) | 59 | 58 | 56 |
| WW* DIN 53 515 [N/mm] | 13,2 | 16,1 | 16,8 |
| Compr. Set (Probekörper II, nach DIN 53 517) | | | |
| 70 h/100° C | 43,0 | 47,1 | 46,5 |
| 70 h/125° C | 66,4 | 70,8 | 69,1 |
| Nitrosamin [ppb] | | | |
| vor Vulkanisation | 18 | 14 | 15 |
| nach Vulkanisation | 24 | 9 | 8 |

*WW = Weiterreißwiderstand

**Patentansprüche**

1. Verwendung von Maleinsäurehalbestern und Fumarsäurehalbestern der Formel

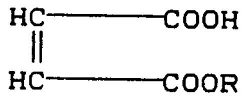

(Ia)

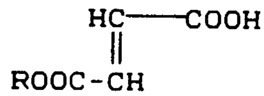

(Ib)

und ihrer Salze,

worin

R einen organischen Rest mit 1 bis 22 C-Atomen bedeutet,

zur Verminderung des Nitrosamingehalts durch Schwefelvulkanisation hergestellter Kautschukvulkanisate.

**2.** Verwendung nach Anspruch 1, wobei R einen organischen Rest mit 4 bis 18 C-Atomen bedeutet.

**3.** Verwendung nach Ansprüchen 1 und 2, wobei der Halbester Maleinsäure-n-octylester, -ethylhexylester, -allylester oder -cyclohexylester ist.

**4.** Verwendung nach Ansprüchen 1-3, wobei die Halbester-Salze die Zinksalze sind.

Europäisches Patentamt

# EUROPÄISCHER RECHERCHENBERICHT

Nummer der Anmeldung

**EP 91 11 7522**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-1 092 175 (FARBENFABRIKEN BAYER AG)<br>* Anspruch 1 *<br>* Seite 1, Zeile 34 - Seite 1, Zeile 46 *<br>* Beispiele * *<br>– – – | 1-3 | C 08 K 5/11<br>C 08 K 5/09<br>C 08 L 21/00 |
| A | US-A-4 434 266 (C.D.TRIVETTE,JR.)<br>* Anspruch 1 * *<br>– – – | 1-3 | |
| A | KAUTSCHUK UND GUMMI - KUNSTSTOFFE - ASBEST.<br>Bd. 43, Nr. 2, Februar 1990, HEIDELBERG DE<br>M.LHEUREUX ET AL.: 'NITROSAMINES IN RUBBER VULCANIZATE: AN EVALUATION OF SPECIFIC INHIBITORS'<br>* das ganze Dokument * *<br>– – – – – | 1 | |

| RECHERCHIERTE SACHGEBIETE (Int. Cl.5) |
|---|
| C 08 K |

Der vorliegende Recherchenbericht wurde für alle Patentansprüche erstellt

| Recherchenort | Abschlußdatum der Recherche | Prüfer |
|---|---|---|
| Den Haag | 11 Februar 92 | VAN HUMBEECK F.W.C. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument